# EUROPEAN PATENT APPLICATION

(11) **EP 1 867 551 A1**
(43) Date of publication of application: **19.12.2007**
(21) Application number: 06425398.2
(22) Date of filing: 13.06.2006
(51) Int. Cl.: B62D 3/12, F16H 55/28

(54) **Steering unit**

(71) Applicant: TRW ITALIA S.p.A., 25063 Gardone Valtrompia (Brescia) (IT)
(72) Inventor: Mutti, Renato, 25038 Rovato (Brescia) (IT)
(74) Representative: Crippa, Paolo Ernesto

(57) **Abstract**

The object of the present invention is a steering unit for a motor vehicle comprising a steering box, a rack, a pinion and support means (10), suitable for supporting the rack. The support means comprise a yoke (12) hydraulically supported by a fluid under pressure.

## Description

. The object of the present invention is a steering unit for motor vehicles.

. Generally, a steering unit comprises a steering box, a rack, seated into said steering box, a pinion, engaged with the rack and at least partly protruding from the steering box, and at least one support element, called yoke, seated into said steering box, supporting the rack.

. The steering unit is associated to a steering column, connected to the steering wheel of the motor vehicle; in particular, said steering column is engaged with the pinion. The steering unit, moreover, is associated to steering axle shafts. In particular, said rack is engaged with said steering axle shafts.

. An example of embodiment of a steering unit is disclosed in document GB2397861, by the Applicant.

. In particular, the object of the present invention is a steering unit comprising hydraulic means supporting the yoke, that is, means suitable for supporting said yoke by oil under pressure.

. As known, when the vehicle is stationary and some manoeuvres are to be carried out, for example for parking, or when the vehicle moves at low speed, the pinion torque required for moving the rack is high. This implies a high axial action of the rack on the yoke, proportional to the pinion torque.

. On the other hand, when the vehicle travels at a high speed, the torque required at the pinion for moving the rack is low, as is the axial action of the rack on the yoke.

. It is therefore recommended that the yoke stiffness, that is, the resistance action opposed by the yoke to the rack action thereon, has different features according to the situation, and in particular that such stiffness is high ("hard" yoke) at low values of the pinion torque (high speed) and on the contrary that it is low ("soft" yoke) at high values of the pinion torque (low speed).

. The object of the present invention is to obtain a steering unit comprising hydraulic support means of the yoke which should meet such need.

. Such object is achieved by a steering unit obtained according to claim 1. The dependent claims describe embodiment variations.

. The features and advantages of the steering unit according to the present invention will appear more clearly from the following description, made by way of an indicative and non-limiting example with reference to the annexed figures, wherein:

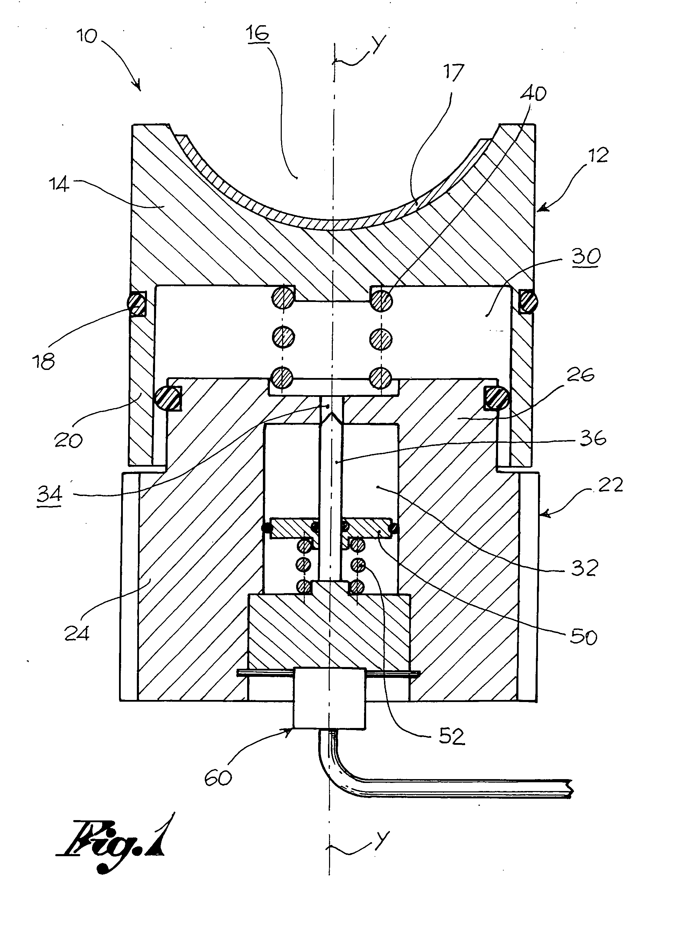

. - figure 1 shows a section view of support means of a steering unit obtained according to the present invention, in a closed configuration; and

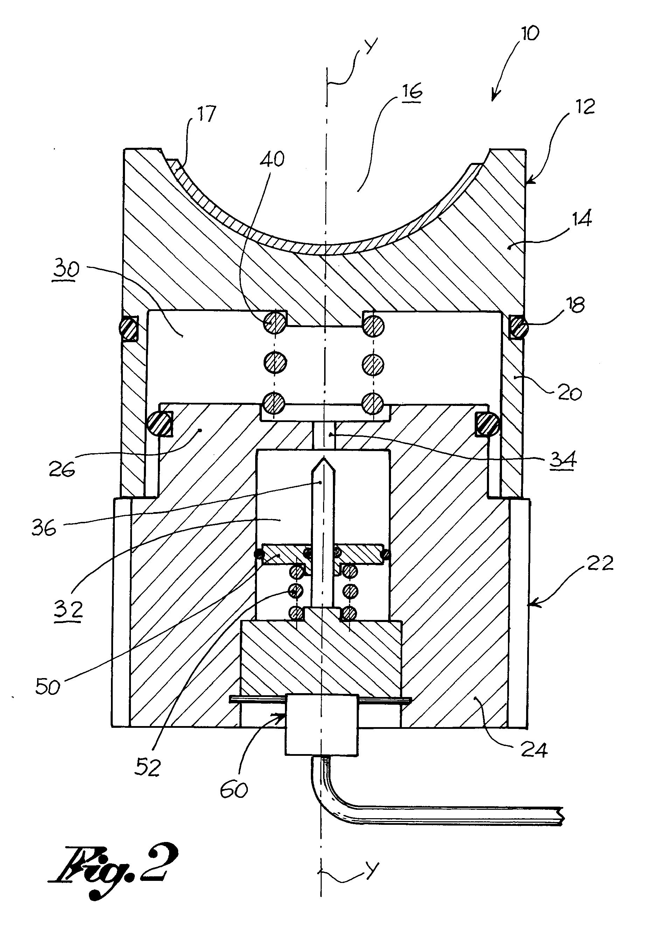

. - figure 2 shows the support means of figure 1, in an open configuration.

. A steering unit according to the present invention comprises a steering box suitable for being connected to a frame of a motor vehicle. Internally, said steering box exhibits a through cavity.

. Moreover, the steering unit comprises a rack, at least partly seated in the steering box. At the ends thereof, the rack is connectable to steering axle shafts and being translatable along a translation axis, it is suitable for controlling, through said translation, the arrangement of the vehicle wheels.

. Moreover, the steering unit comprises a pinion, connectable at an end thereof to the steering column, for receiving a rotation controlled by a steering wheel that can be gripped by a user. The other end of the pinion, arranged in the steering box, engages with the rack, for controlling the translation thereof.

. Moreover, the steering unit comprises support means 10, seated in the steering box, suitable for supporting the rack.

. The support means 10 comprise a yoke 12, suitable for sliding along a support axis Y-Y, incident to the rack translation axis.

. Preferably, yoke 12 comprises a cylindrical body 14, which extends about said support axis Y-Y, having a seat 16 that develops along said translation axis for seating the rack.

. Preferably, arranged on the bottom of seat 16, yoke 12 comprises a coating layer 17, in direct contact with the rack.

. On the outer surface thereof, the cylindrical body exhibits at least one groove for seating a first sealing ring 18, for obtaining the seal of the yoke on the walls of the space of the steering box seating it.

. Yoke 12, in the end opposite that exhibiting seat 16 for the rack, exhibits a yoke space, annularly delimited by a coupling wall 20 of the cylindrical body 14.

. Moreover, the support means 10 comprise a fixed body 22, for example cylindrical and having axis coinciding with the support axis Y-Y of yoke 12.

. Preferably, the fixed body 22 comprises a lower portion 24 and an upper portion 26, having smaller diameter than the lower portion.

. Yoke 12 is inserted on the fixed body 22 so that the coupling wall 20 of the yoke fits on the upper portion 26 of the fixed body.

. Preferably, moreover, the upper portion 26 externally exhibits a groove for seating a second sealing ring 28, for obtaining the seal between the yoke and the fixed body.

. The coupling between the coupling wall 20 of the yoke and the upper portion 26 of the fixed body 22 forms a main body 30 for seating fluid under pressure, for example oil.

. The yoke 12 supports the rack by the fluid under pressure.

. Preferably, the support means 10 comprise a first elastic element 40, seated in said main space 30 and comprised between the yoke and the fixed body for constantly influencing yoke 12 towards the rack.

. Moreover, the fixed body 22 exhibits an internal secondary space 32 and a gap 34 suitable for placing the secondary space 32 in communication with the main space 30.

. Moreover, said support means comprise a pin 36, seated in said secondary space 32 of the fixed body 22, suitable for being moved between a closed configuration, wherein it closes said gap 34 and separates the main space 30 from the secondary space 32, to a open configuration, wherein it frees said gap 34, placing the main space 30 in communication with the secondary space 32.

. As can be understood, in the open configuration of the pin, the main space 30 and the secondary space 32 form a single pressure chamber that contains the fluid under pressure for supporting the rack.

. Gap 34 and pin 36 on the other hand form an example of cut off means suitable for making said pressure chamber take a different active volume for seating fluid under pressure suitable for supporting the yoke.

. In fact, in the closed configuration of the pin, only the fluid present in the main space is active for supporting the yoke, whereas the residual fluid in the secondary space is inert. In the open configuration, on the other hand, the fluid present in the main space and in the secondary space is active in supporting the yoke.

. Moreover, the support means 10 comprise a piston 50 suitable for sealingly sliding in said secondary space 32, and a second elastic element 52, suitable for constantly influencing said piston 50 for stimulating the fluid escape from the secondary space 32 towards the main space 30.

. Preferably, piston 50 is slidingly and sealingly mounted on pin 36.

. According to a preferred embodiment, the unit comprises control means 60 suitable for translating pin 36 from the closed configuration to the open one and vice versa. Preferably, the control means are electrical, that is, they operate on pin 36 subsequent to an electrical control, for example through the generation of a magnetic field acting on the pin.

. According to a further preferred embodiment, the steering unit comprises detecting means suitable for detecting an operating parameter of the steering unit, for example the pinion torque or the action between pinion and rack.

. The detecting means are operatively connected to said control means for controlling the pin translation when the operating parameter detected reaches a predetermined value, called threshold value.

. In the standard operation of the steering unit, in the closed configuration (figure 1), pin 36 is in a raised position, such as to obstruct gap 34.

. The pressure chamber therefore exhibits a reduced active volume, since the main space 30 is in fluid separation from the secondary space 32, and so only the fluid contained in the main space 30 is active for supporting the yoke.

. Preferably, the closed configuration is taken by the support means when the pinion torque has a low value, or when the action between the rack and the pinion has a low value. Such condition generally occurs when the vehicle proceeds at a high speed.

. The main space 30, in the closed configuration, is a closed space, with indeformable volume, and so the active fluid supports the yoke to an extent depending on the pressure imparted thereto.

. When the detecting means detect the reaching of a threshold value of the pinion torque or of the pinion-rack action, they send a signal to control means 60 for raising pin 36.

. In such situation, yoke 12 is supported very stiffly, since the action of the rack on the yoke is opposed by the action of the first elastic element 40 and the action of the fluid under pressure contained in the main space 30.

. In the open configuration (figure 2), pin 36 is in a lowered position, such as to leave gap 34 free.

. The pressure chamber therefore exhibits a larger volume than in the closed configuration, since the main space 30 is in fluid communication with the secondary space 32, so the fluid contained in the main space 30 and in the secondary space 32 contribute to the yoke support.

. Preferably, the open configuration is taken by the support means when the pinion torque has a high value, or when the action between the rack and the pinion has a high value. Such condition generally occurs when the vehicle proceeds at a moderate speed or is stationary.

. When the detecting means detect the reaching of a threshold value of the pinion torque or of the pinion-rack action, they send a signal to control means 60 for lowering pin 36.

. In such situation, yoke 12 is supported softly, since the action of the rack on the yoke is opposed by the action of the first elastic element 40 and the action of the second elastic element 52, which is transmitted to the yoke through the fluid contained in the pressure chamber.

. In other words, in the open configuration, the main 30 and secondary space 32 form a variable volume space based on the stiffness of the second elastic element 52.

. A passage from the open configuration to the closed configuration occurs when the pinion torque or the pinion-rack action change from a high value to a low value, passing by the fixed threshold value.

. In such situation of passage, the yoke raises, drawing part of the fluid from the secondary space 32 to the main space 30, with a suction action.

. Once the threshold value has been reached, the control means raise the pin for obstructing gap 34.

. Innovatively, the steering unit according to the present invention allows supporting the rack more stiffly or more softly according to the vehicle driving situation.

. Advantageously, moreover, the control of the cut off means can be obtained from a preselected operating parameter, directly or with a desired delay or advance, according to the driving needs.

. It is clear that a man skilled in the art can make several changes and variations to the steering unit described above in order to meet specific and incidental needs.

. In a variation of embodiment, the pressure chamber exhibits a variable volume according to a controlled stiffness, so as to control the support action of said support means on the rack.

. Also such variations are comprised within the scope of protection as defined by the following claims.

## Claims

1. A steering unit for a motor vehicle, comprising:
- a steering box suitable for being associated to a frame of said motor vehicle;
- a rack, associable to steering axle shafts of said motor vehicle and suitable for sliding along a translation axis for controlling the arrangement of the vehicle wheels, said rack being at least partly seated in said steering box;
- a pinion, engaged with said rack, and associable to a steering column of said motor vehicle;
- support means (10), seated in said steering box and suitable for supporting said rack;
wherein said support means comprise a yoke (12) suitable for sliding along a support axis (Y-Y) incident to said translation axis of the rack;
said steering unit being **characterised in that**
said yoke is hydraulically supported by a fluid under pressure.

2. A unit according to claim 1, wherein said support means comprise a fixed body (22), on which said yoke is sealingly engaged, obtaining a pressure chamber for seating the fluid under pressure.

3. A unit according to claim 2, wherein said support means comprise a first elastic element (40) seated in said chamber for constantly influencing said yoke towards said rack.

4. A unit according to claim 2 or 3, wherein said support means comprise cut off means suitable for making said pressure chamber take a different active volume for seating fluid under pressure suitable for supporting the yoke (12).

5. A unit according to claim 4, wherein said cut off means are suitable for separating said chamber into a main space (30), comprised between the yoke (12) and the fixed body (22), and a secondary space (32), comprised within said fixed body (22).

6. A unit according to claim 5, wherein said cut off means comprise a gap (34) between said main space (30) and said secondary space (32) and a pin (36) suitable for being moved between a closed configuration, wherein it closes said gap and separates said main space from said secondary space, and an open configuration, wherein it opens said gap, placing said main space in communication with said secondary space.

7. A unit according to claim 5 or 6, comprising a piston (50) suitable for sealingly sliding in said secondary space, and a second elastic element (52) suitable for constantly influencing said piston.

8. A unit according to claim 6 and 7, wherein said piston is slidingly and sealingly mounted on said pin.

9. A unit according to any one of claims 6 to 8, comprising control means (60) suitable for translating said pin from said closed configuration to said open configuration and vice versa.

10. A unit according to claim 9, wherein said control means are electrical.

11. A unit according to claim 9 or 10, comprising detecting means suitable for detecting an operating parameter of said steering unit, said detecting means being operatively connected to said control means for controlling said translation of the pin when said operating parameter reaches a predetermined value.

12. A unit according to claim 11, wherein said detecting means comprise means for detecting the torque acting on the pinion.

13. A unit according to claim 11 or 12, wherein said detecting means comprise means for detecting the axial action acting between the pinion and the rack.

14. A unit according to any one of the previous claims,
wherein said yoke comprises a coating layer (17) in direct contact with the rack.

15. A unit according to any one of the previous claims, comprising a pressure chamber for containing said fluid,
wherein said pressure chamber exhibits a variable volume with controlled stiffness for controlling the support action of said support means on said rack.

## Amended claims

### Amended claims in accordance with Rule 137(2) EPC.

**1.** A steering unit for a motor vehicle, comprising:
- a steering box suitable for being associated to a frame of said motor vehicle;
- a rack, associable to steering axle shafts of said motor vehicle and suitable for sliding along a translation axis for controlling the arrangement of the vehicle wheels, said rack being at least partly seated in said steering box;
- a pinion, engaged with said rack, and associable to a steering column of said motor vehicle;
- support means (10), seated in said steering box and suitable for supporting said rack;
wherein said support means comprise a yoke (12) suitable for sliding along a support axis (Y-Y) incident to said translation axis of the rack;
wherein said yoke is hydraulically supported by a fluid under pressure;
and wherein said support means comprise a fixed body (22), on which said yoke is sealingly engaged, obtaining a pressure chamber for seating the fluid under pressure,
and wherein said support means comprise cut off means suitable for making said pressure chamber take a different active volume for seating fluid under pressure suitable for supporting the yoke (12),
and wherein said cut off means are suitable for separating said chamber into a main space (30), comprised between the yoke (12) and the fixed body (22), and a secondary space (32), comprised within said fixed body (22)
and wherein said cut off means comprise a gap (34) between said main space (30) and said secondary space (32) and a pin (36) suitable for being moved between a closed configuration, wherein it closes said gap and separates said main space from said secondary space, and an open configuration, wherein it opens said gap, placing said main space in communication with said secondary space,
and wherein said unit comprises control means (60) suitable for translating said pin from said closed configuration to said open configuration and vice versa
said unit being **characterized in that** it comprises detecting means suitable for detecting an operating parameter of said steering unit, said detecting means being operatively connected to said control means for controlling said translation of the pin.

**2.** A unit according to claim 1 , wherein said support means comprise a first elastic element (40) seated in said chamber for constantly influencing said yoke towards said rack.

**3.** A unit according to claim 1 or 2 , comprising a piston (50) suitable for sealingly sliding in said secondary space, and a second elastic element (52) suitable for constantly influencing said piston.

**4.** A unit according to claim 3, wherein said piston is slidingly and sealingly mounted on said pin.

**5.** A unit according to any one of the preceding claims wherein said control means are electrical.

**6.** A unit according to any one of the preceding claims wherein said detecting means comprise means for detecting the torque acting on the pinion.

**7.** A unit according to any one of the preceding claims wherein said detecting means comprise means for detecting the axial action acting between the pinion and the rack.

**8.** A unit according to any one of the previous claims, wherein said yoke comprises a coating layer (17) in direct contact with the rack.

**9.** A unit according to any one of the previous claims, comprising a pressure chamber for containing said fluid, wherein said pressure chamber exhibits a variable volume with controlled stiffness for controlling the support action of said support means on said rack.

**10.** A unit according to any one of the preceding claims, wherein said control means are suitable control said translation of the pin when said operating parameter reaches a predetermined value.
